# EUROPÄISCHE PATENTSCHRIFT

(11) **EP 3 823 100 B1**
(45) Veröffentlichungstag und Bekanntmachung des Hinweises auf die Patenterteilung: **26.06.2024**
(21) Anmeldenummer: 20206306.1
(22) Anmeldetag: 06.11.2020
(51) Int. Cl.: H01R 13/20, H01R 13/432, H01R 13/11, H01R 13/05, H01R 24/76, H01R 43/26, H01R 25/00, H01R 4/20, H01R 13/405, H01R 31/06, H01R 13/645

(54) **KLEMMVORRICHTUNG**
CLAMPING DEVICE
DISPOSITIF DE SERRAGE

(30) Priorität: 18.11.2019 CH 14522019
(43) Veröffentlichungstag der Anmeldung: 19.05.2021
(73) Patentinhaber: LexTho GmbH, 8472 Seuzach (CH)
(72) Erfinder: Hagen, Walter, 8472 Seuzach (CH)
(74) Vertreter: Frei Patent Attorneys

(56) Entgegenhaltungen:
- EP-A1- 3 477 774
- DE-T5-112017 006 748
- DE-U1- 9 210 735
- FR-A1- 2 244 276
- US-A- 4 857 016
- US-A- 5 908 322
- US-A1- 2017 141 516

## Beschreibung

Gegenstand der Erfindung ist eine Klemmvorrichtung und ein Verfahren zum ausreissfesten Verbinden von elektrischen Leitern bei Elektroinstallationen in Gebäuden gemäss den Merkmalen der Patentansprüche 1 und 9.

Bei Elektroinstallationen in Gebäuden müssen elektrische Leiter in Schutzrohren geführt sein. Solche Schutzrohre können zumindest teilweise unter Putz, also in Wänden, Decken oder Mauern verlegt sein. Die offenen Endbereiche der Schutzrohre sind bei solchen Installationen in der Regel bei Installationsdosen oder Übergangsdübeln angeordnet, die von der Aussenseite des jeweiligen Bauwerkteils zugänglich sind. Alternativ können Endbereiche von Schutzrohren auch aus dem jeweiligen Bauwerkteil herausragen. Oft ist es erforderlich, elektrische Leiter über das Ende eines Schutzrohrs hinaus ausserhalb des Bauwerkteils in einem weiteren Schutzrohr an den jeweiligen Bestimmungsort zu führen. Herkömmlich muss beim Einziehen von elektrischen Leitern in das erste Schutzrohr sichergestellt werden, dass diese Leiter genügend lang sind. Die aus dem ersten Schutzrohr herausragenden Endbereiche solcher Leiter müssen dann durch das weiterführende Schutzrohr hindurchgezogen und an den jeweiligen Bestimmungsort geführt werden, wo sie z.B. mit Kontakten einer Steckdose, eines Schalters oder eines elektrischen Verbrauchers verbunden werden.

Das Abschätzen einer optimalen Länge von elektrischen Leitern wie z.B. Installationsdrähten, die in zwei Schutzrohre eingezogen werden müssen, ist schwierig. Die Leiter sind meist zu lange und müssen anschliessend gekürzt werden. Dadurch entsteht unnötig viel Abfall. Der Aufwand zum seriellen Einziehen von elektrischen Leitern in mehrere aufeinanderfolgende Schutzrohre beim jeweiligen Bauwerk ist zudem zeitaufwändig. Dies gilt auch dann, wenn keines der Schutzrohre unter Putz verlegt ist.

Aus der US2017/141516A1 ist eine Klemmvorrichtung nach dem Oberbegriff des Anspruchs 1, insbesondere eine Steckverbindung von Lichterketten bekannt. Diese umfasst eine Steckeranordnung mit Kontaktstiften und eine Buchsenanordnung mit Kontaktklemmen. Die Steckeranordnung umfasst ein Steckergehäuse und einen darin angeordneten Steckereinsatz, an dem mehrere Kontaktstifte gehalten sind. Die Buchsenanordnung umfasst ein Buchsengehäuse und einen darin angeordneten Buchseneinsatz, an dem mehrere Kontaktklemmen gehalten sind.

Jeder Kontaktstift und jede Kontaktklemme umfasst eine Fangplatte, die zwischen einem hülsenartig ausgebildeten zylindrischen Kontaktbereich und einem Crimpverbinder angeordnet ist. Die Fangplatte dient dazu, den Kontaktstift bzw. die Kontaktklemme in einer definierten Ausrichtung am jeweiligen Einsatz zu sichern. Die Kontaktklemmen umfassen kalottenartige Vorsprünge und die Kontaktstifte damit korrespondierende Vertiefungen an ihren zusammensteckbaren zylindrischen Abschnitten. Die Steckeranordnung und die Buchsenanordnung können wiederlösbar miteinander verbunden werden, wobei die Kontaktstifte in die korrespondierenden Kontaktklemmen eingeschoben werden. Beim Erreichen der Endlage werden die Vorsprünge der Kontaktklemmen in den Vertiefungen der jeweiligen Kontaktstifte aufgenommen. Durch eine ausreichend grosse Zugkraft in entgegengesetzter Richtung können die Kontaktstifte wieder aus den Kontaktklemmen herausgezogen werden. Dabei werden zwei durch einen Längsschlitz getrennten Teilbereiche jeder Kontakthülse elastisch verformt.

FR2244276A1 offenbart eine Steckvorrichtung, bei der ein Bolzen innerhalb eines Körpers mit einer Bohrung nicht wiederlösbar mit einer Kontakthülse verbunden wird. Der am Körper hervorragende freiliegende Bolzen ist dazu bestimmt, wiederlösbar in eine Buchse einer Steckdose eingesteckt zu werden.

Eine Aufgabe der vorliegenden Erfindung ist es deshalb, eine Vorrichtung zu schaffen, mit der elektrische Leiter bei Elektroinstallationen in Gebäuden einfach ausreissfest miteinander verbunden werden können.

Diese Aufgabe wird gelöst durch eine Klemmvorrichtung gemäss den Merkmalen des Patentanspruchs 1 und durch ein Verfahren zum ausreissfesten Verbinden von elektrischen Leitern bei Elektroinstallationen in Gebäuden gemäss den Merkmalen des Patentanspruchs 9.

Die Klemmvorrichtung umfasst ein Stiftgehäuse mit Kontaktstiften und damit korrespondierende Kontaktklemmen in einem Buchsengehäuse. Bei jedem zu verbindenden Leiterpaar wird zumindest einer der Leiter z.B. durch Crimpen, Löten oder in sonstiger Weise elektrisch leitend mit einer der Kontaktklemmen verbunden. Danach wird diese Kontaktklemme von der Rückseite her in eine zugehörige durchgehende Ausnehmung des Buchsengehäuses eingeführt. In einer Endlage wird die jeweilige Kontaktklemme durch federnde Rastelemente und Anschläge formschlüssig innerhalb der Ausnehmung am Buchsengehäuse gesichert.

Erfindungsgemäss sind auf diese Weise mehrere, insbesondere vier Kontaktklemmen ausreissfest im Buchsengehäuse gehalten.

Der jeweils zweite Leiter jedes zu verbindenden Leiterpaars wird z.B. über eine weitere Kontaktklemmverbindung elektrisch leitend mit dem zugehörigen Kontaktstift verbunden.

Das Buchsengehäuse und das Stiftgehäuse können vorzugsweise mechanische Codierungen umfassen, die das Zusammenführen der beiden Gehäuse in einer definierten gegenseitigen Ausrichtung ermöglichen. Dadurch wird sichergestellt, dass nur zusammengehörige Kontaktpaare miteinander verbunden werden können.

Die Verbindung aller Kontaktklemmen mit den jeweils zugehörigen Kontaktstiften erfolgt gleichzeitig, indem das Buchsengehäuse und das Stiftgehäuse in einer durch die Längsrichtung der Kontaktstifte vorgegebenen Verbindungsrichtung zusammengeführt werden.

Die Kontaktklemmen haben an ihrer Innenseite hervorragende federnde Rastelemente. Beim Aufstecken der Kontaktklemmen auf die Kontaktstifte werden diese Rastelemente durch Federkraft in korrespondierende Ausnehmungen an den Kontaktstiften gedrückt, sobald die Kontaktklemmen ihre Endlage erreicht haben. In der jeweiligen Endlage sind die Kontaktklemmen formschlüssig und ausreissfest mit den Kontaktstiften verbunden.

Die Kontaktstifte sind fest mit dem Stiftgehäuse verbunden. Vorzugsweise ist das Stiftgehäuse in Spritzgiesstechnik aus einem Kunststoff gefertigt, und die Kontaktstifte sind teilweise in den Kunststoff eingebettet. Die Kontaktklemmen sind ebenfalls ausreissfest am Buchsengehäuse gehalten. Deshalb sind das Buchsengehäuse und das Stiftgehäuse nicht wiederlösbar miteinander verbunden, wenn die Kontaktklemmen mit den Kontaktstiften verbunden sind.

Vorzugsweise ist jeder Kontaktstift elektrisch leitend mit einem korrespondierenden weiteren Kontaktstift im selben Stiftgehäuse verbunden. Insbesondere können Kontaktstifte und ihre korrespondierenden weiteren Kontaktstifte jeweils einstückig ausgebildet sein, wobei die beiden Endbereiche gleichartig ausgebildet und zum Befestigen von Kontaktklemmen geeignet sind.

Die jeweils zweiten Leiter jedes zu verbindenden Leiterpaars können analog zu den ersten Leitern mit Kontaktklemmen ausgerüstet und mit den korrespondierenden Kontaktstiften verbunden werden. Dies hat den Vorteil, dass an den Enden jedes der zu verbindenden Leiter identische Kontaktklemmen angeordnet werden können. Jede Kontaktklemme wird dann in die entsprechende Aufnahme am Stiftgehäuse oder am Buchsengehäuse eingeschoben und ausreissfest mit dem jeweiligen Kontaktstift bzw. dem Buchsengehäuse verbunden.

Vorzugsweise umfasst das Stiftgehäuse peripher zu den Kontaktstiften eine ringförmige Ausnehmung zum Aufnehmen des Endes eines Installationsrohrs, in dem die jeweiligen Leiter angeordnet sind. In diesem Bereich kann das Stiftgehäuse Mittel zum kraftschlüssigen und/oder formschlüssigen Verbinden des Installationsrohrs umfassen, beispielsweise hervorragende Strukturen wie z.B. Rippen und/oder eine Gewindebohrung mit einer Madenschraube. Rippen können insbesondere quer zur Einschubrichtung des Installationsrohrs angeordnet sein und optional einen sägezahnartigen Querschnitt aufweisen, der das Einschieben eines Installationsrohrs nicht oder nur unwesentlich behindert, Bewegungen in die entgegengesetzte Richtung jedoch stark erschwert. Vorzugsweise sind solche Rippen nur sektorweise an einer oder beiden die ringförmige Ausnehmung begrenzenden Wänden des Stiftgehäuses angeordnet. Wenn das Stiftgehäuse in Spritzgiesstechnik hergestellt wird, kann es bei der Herstellung leichter vom jeweiligen Werkzeug getrennt werden.

In analoger Weise kann auch das Buchsengehäuse Mittel zum Befestigen eines Installationsrohrs umfassen. Leiter, die in zwei Installationsrohren geführt sind können so auf einfache Weise miteinander verbunden werden, indem das Buchsengehäuse und das Stiftgehäuse an den Enden dieser Installationsrohre in Verbindungsrichtung zusammengesteckt werden.

Bei alternativen Ausführungsformen können das Buchsengehäuse und gegebenenfalls ein angrenzender Abschnitt des Stiftgehäuses so ausgebildet sein, dass sie in einen Übergangsdübel eingeschoben und an diesem befestigt werden können. Insbesondere können peripher am Buchsengehäuse und/oder am Stiftgehäuse Strukturen wie z.B. hervorragende Rippen und/oder federnde Rastelemente zum kraftschlüssigen und/oder formschlüssigen Verbinden mit einem Übergangsdübel ausgebildet sein.

Optional können Übergangsdübel mit solchen Strukturen zusammenwirkende Strukturen wie z.B. Absätze bzw. Anschläge von hervorragenden Rippen oder eingelassenen Ausnehmungen umfassen.

Anhand einiger Figuren werden im Folgenden Ausführungsformen der erfindungsgemässen Klemmvorrichtung näher beschrieben. Dabei zeigen
- Figur 1: eine Klemmvorrichtung mit einem Buchsengehäuse und einem Stiftgehäuse in einer ersten perspektivischen Ansicht,
- Figur 2: die Klemmvorrichtung aus Figur 1 in einer zweiten perspektivischen Ansicht,
- Figur 3: die Klemmvorrichtung aus Figur 1 von der Seite des Buchsengehäuses her gesehen,
- Figur 4: einen Längsschnitt der zusammengesetzten Klemmvorrichtung entlang der Linie A-A in Figur 3,
- Figur 5: einen Längsschnitt des Buchsengehäuses und des Stiftgehäuses mit Kontaktstiften,
- Figur 6: eine perspektivische Ansicht und einen Längsschnitt einer Kontaktklemme.

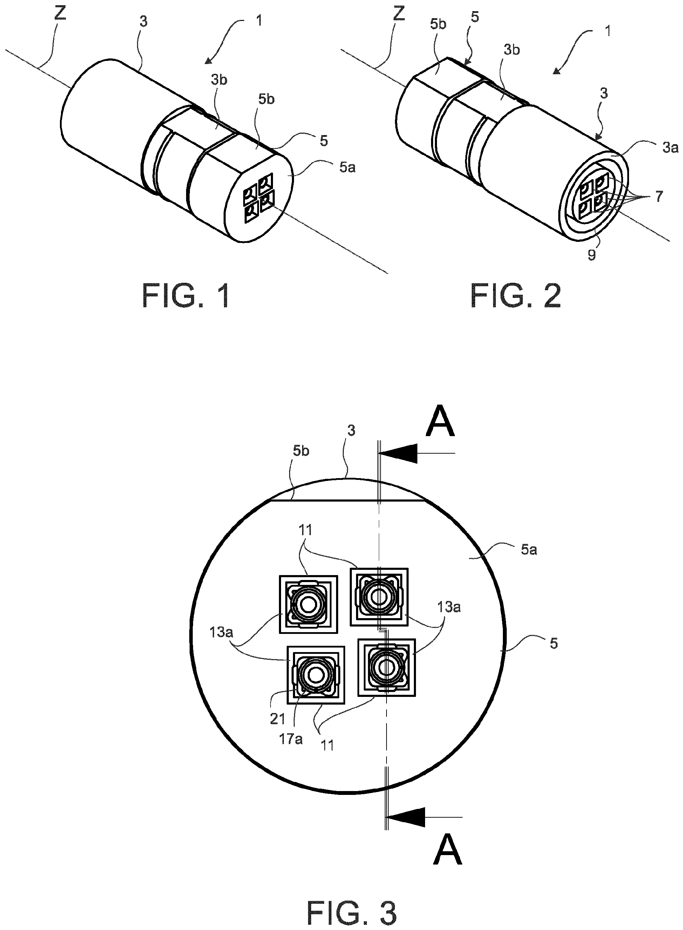

Die Figuren 1 und 2 zeigen eine Ausführungsform einer Klemmvorrichtung 1 in zwei unterschiedlichen Perspektiven von einer Anschlussseite 5a des Buchsengehäuses 5 bzw. von einer Anschlussseite 3a des Stiftgehäuses 3 her gesehen. Die Klemmvorrichtung 1 umfasst ein Stiftgehäuse 3 und ein Buchsengehäuse 5, die in Richtung einer Klemmachse Z zusammengefügt sind und beide eine zylindrische Grundform haben. Die Mantelflächen des Buchsengehäuses 5 und eines daran angrenzenden Abschnittes des Stiftgehäuses 3 umfassen je einen Abschnitt mit abgeplatteten Bereichen 5b, 5b', 3b als Codierung. Aufgrund dieser Asymmetrie können das Stiftgehäuse 3 und das Buchsengehäuse 5 nur in einer definierten relativen Ausrichtung zusammengefügt werden.

Das Stiftgehäuse 3 umfasst anschlussseitig in einem zentralen, näherungsweise zylindrischen Abschnitt vier Sacklöcher 7. Dieser zentrale Abschnitt und die Wandung des Stiftgehäuses 3 begrenzen eine zur Anschlussseite 3a hin offene Rohraufnahme 9 mit näherungsweise ringförmigem Querschnitt. Vorzugsweise hat die Rohraufnahme 9 einen leichten Anzug, d.h. die freie Querschnittfläche ist unmittelbar bei der Anschlussseite 3a am grössten und verkleinert sich mit zunehmender Tiefe. Dies erleichtert das Einführen des Endes eines Installationsrohrs und bewirkt eine gute kraftschlüssige Verbindung des Installationsrohrs, wenn dieses weiter in die Rohraufnahme 9 eingepresst wird. Zusätzlich oder alternativ kann das Stiftgehäuse 3 im Bereich der Rohraufnahme 9 Strukturen zum verbesserten kraftschlüssigen und/oder formschlüssigen Halten eines eingeschobenen Installationsrohres umfassen, beispielsweise sägezahnförmige Rippen (nicht dargestellt).

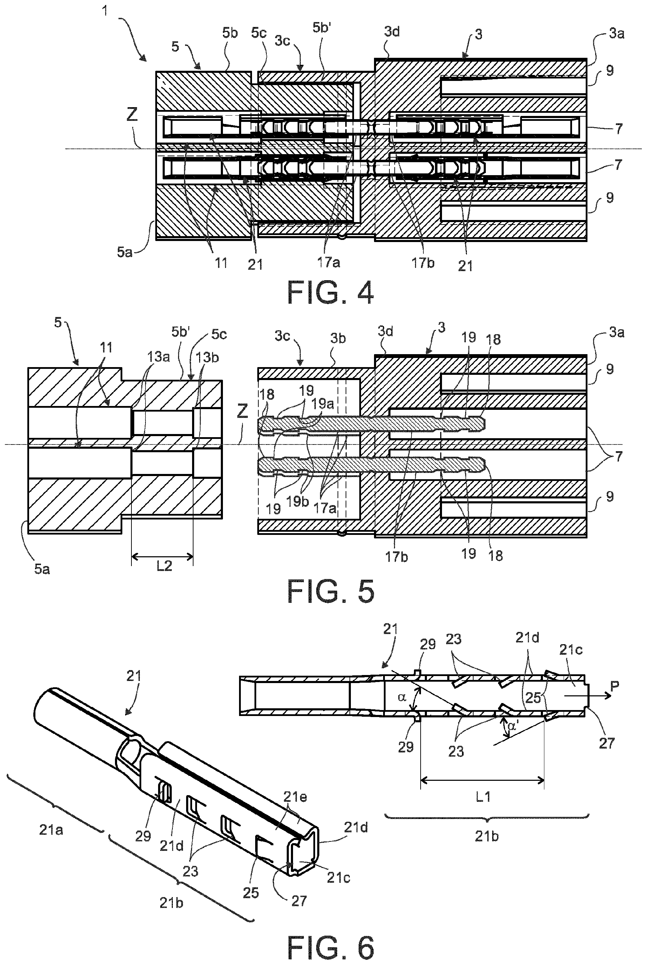

Figur 3 zeigt eine Ansicht der zusammengesetzten Klemmvorrichtung 1 in Richtung der Klemmachse Z mit Blick auf die Anschlussseite 5a des Buchsengehäuses 5 und Figur 4 einen Längsschnitt der Klemmvorrichtung entlang der Linie A-A in Figur 3.

Das Buchsengehäuse 5 umfasst vier in Richtung der Achse Z durchgehende Ausnehmungen 11. Die freien Querschnitte dieser Ausnehmungen 11 sind vorzugsweise abschnittweise quadratisch. In einem mittleren Abschnitt jeder Ausnehmung 11 ist der freie Querschnitt kleiner als in den angrenzenden äusseren Abschnitten, sodass an den Übergangsstellen rahmenartige Anschlagflächen 13a, 13b ausgebildet sind. Diese Details sind in Figur 5 klarer erkennbar. Figur 5 zeigt einen Längsschnitt des Buchsengehäuses 5 und des Stiftgehäuses 3 mit den darin eingebetteten Kontaktstiften 17a, 17b. Im Unterschied zu Figur 4 sind das Buchsengehäuse 5 und das Stiftgehäuse 3 getrennt und ohne Kontaktklemmen 21 dargestellt. Das Buchsengehäuse 5 umfasst einen anschlussseitigen Abschnitt und daran anschliessend einen Verbindungsabschnitt 5c, dessen Aussenkontur passend zu einer Innenkontur eines angrenzenden Verbindungsabschnittes 3c des Stiftgehäuses 3 ausgebildet ist. Im Verbindungsabschnitt 3c begrenzt die Wandung des Stiftgehäuses 3 eine Gehäuseaufnahme, die zum Einschieben des Verbindungsabschnitts 5c des Buchsengehäuses 5 bestimmt ist. Aufgrund der asymmetrischen Form können die Teile nur in einer definierten gegenseitigen Drehlage zusammengefügt werden.

Vier primäre Kontaktstifte 17a, ragen von einer Gehäusebasis 3d her in Richtung der Klemmachse Z in die Gehäuseaufnahme hinein. Auf der gegenüberliegenden Seite ragen von der Gehäusebasis 3d her sekundäre Kontaktstifte 17b koaxial zu den primären Kontaktstiften 17a in die Sacklöcher 7 hinein. Vorzugsweise ist jeder primäre Kontaktstift 17a einstückig mit dem jeweiligen sekundären Kontaktstift 17b gefertigt. Der mittlere Bereich jedes Kontaktstiftpaares 17a, 17b ist in die Gehäusebasis 3d eingebettet. Vorzugsweise sind in diesem Bereich bezüglich der jeweiligen Stiftachse radial hervorstehende oder vertiefte Strukturen ausgebildet, beispielsweise eine umlaufende Nut. Dadurch ist jedes Kontaktstiftpaar 17a, 17b formschlüssig und ausreisssicher mit dem Stiftgehäuse 3 verbunden. Die Köpfe 18 bzw. Enden der Kontaktstifte 17a, 17b sind angefast. Dies erleichtert das Aufstecken von Kontaktklemmen 21 (Figuren 4 und 6). Jeder der Kontaktstifte 17a, 17b umfasst zwischen dem Kopf 18 und der Gehäusebasis 3d mindestens einen, vorzugsweise zwei Halsabschnitte 19 mit geringerer Querschnittfläche. Insbesondere können die Kontaktstifte 17a, 17b in diesen Bereichen umlaufende Nuten umfassen, die den Querschnitt eines rechtwinkligen Trapezes haben, sodass die Nuten 19 kopfseitig durch rechtwinklig zur jeweiligen Stiftachse angeordnete Anschlagflächen 19a begrenzt sind. Diese Anschlagflächen 19a sind dazu bestimmt, federnde Rastelemente 23 von Kontaktklemmen 21 aufzunehmen, wenn die Kontaktklemmen 21 auf die jeweiligen Kontaktstifte 17a, 17b aufgesteckt werden und ihre bestimmungsgemässe Endlage erreichen. Die Kontaktklemmen 21 werden so formschlüssig und ausreissfest an den jeweiligen Kontaktstiften 17a, 17b gehalten.

Jede Nut 19 ist auf der entfernt vom jeweiligen Kopf 18 liegenden Seite durch eine konische Schulter 19b begrenzt. Beim Aufschieben einer Kontaktklemme 21 auf einen Kontaktstift 17a, 17b werden Rastelemente 23 durch die Schultern 19b entgegen der wirkenden Federkraft radial nach aussen verdrängt, sodass sie den folgenden Abschnitt des jeweiligen Kontaktstifts 17a, 17b mit grösserem Querschnitt passieren können.

Figur 6 zeigt einen Längsschnitt und eine perspektivische Darstellung einer Kontaktklemme 21. Sie ist vorzugsweise einstückig aus einem elektrisch leitenden Metallblech hergestellt, beispielsweise aus verzinntem oder vernickeltem Messing. Ähnlich einer Steckhülse umfasst die Kontaktklemme 21 einen Anschlussabschnitt 21a zum elektrischen und mechanischen Verbinden eines Leiters, insbesondere eines Installationsdrahtes oder einer mehrdrähtigen Ader. Die Verbindung kann z.B. durch Crimpen oder Löten erfolgen. Optional kann im Anschlussabschnitt 21a je ein Bereich zum Herstellen einer elektrischen Verbindung und einer mechanischen Verbindung vorgesehen sein. Insbesondere kann ein Teil des Anschlussabschnitts 21a Mittel zum Festklemmen eines Endabschnitts eines Isolationsmantels des jeweiligen Leiters umfassen. Dadurch kann verhindert werden, dass der Isolationsmantel beim Ausüben einer Zugkraft relativ zum Leiter verschoben wird. In einem zum Aufstecken auf Kontaktstifte 17a, 17b ausgebildeten Kontaktabschnitt 21b hat die Kontaktklemme 21 einen näherungsweise quadratischen Querschnitt, wobei ausgehend von einem Boden 21c zwei Seitenwände 21d U-förmig nach oben umgeformt sind, und wobei die oberen Endbereiche 21e dieser Seitenwände 21d vorzugsweise um einen Winkel zwischen 90° und 135° zur Mitte hin umgeformt sind. Diese Teile bilden eine Hülse mit einer Öffnung 27 zum Einführen eines Kontaktstiftes 17a, 17b.

An den Seitenwänden 21d sind drei paarweise gegenüberliegende zungenartige Teilbereiche gestanzt und als federnde Rastelemente 23, 25 nach innen bzw. nach aussen umgeformt. Die Rastelemente 23, 25 sind an der näher bei der frontseitigen Öffnung 27 gelegenen Seite mit der jeweiligen Seitenwand 21d verbunden. Die Auslenkwinkel α, α' gegenüber der jeweiligen Seitenwand 21d nach innen bzw. nach aussen liegen vorzugsweise zwischen etwa 10° und etwa 45°.

Am nächsten bei der Öffnung 27 sind zwei Rastelemente 25 nach aussen umgeformt. Sie dienen zum Verrasten bzw. Verriegeln der Kontaktklemme 21 an den vorderen Anschlagflächen 13b bei den Ausnehmungen 11 von Gehäusebuchsen 5.

Entgegen der durch einen Pfeil P angegebenen Klemmrichtung folgen beabstandet zueinander zwei Paar nach innen umgeformte Rastelemente 23. Sie dienen zum Verriegeln der Kontaktklemme 21 an korrespondierenden Anschlagflächen 19a der Kontaktstifte 17a, 17b.

Am weitesten entfernt von der Öffnung 27 ragen zwei Endanschläge 29 an den Seitenwänden 21d nach aussen.

Sie sind dazu bestimmt, den Bewegungsspielraum der Kontaktklemme 21 beim Einschieben in Klemmrichtung P in eine Ausnehmung 11 eines Buchsengehäuses 5 zu begrenzen. Jeder der Endanschläge 29 ist vorzugsweise ein um 90° nach aussen umgebogener Endabschnitt eines gestanzten zungenartigen Teilbereichs der jeweiligen Seitenwand 21d. Diese Zungen sind an ihrer weiter entfernt von der frontseitigen Öffnung 27 gelegenen Seite mit der jeweiligen Seitenwand 21d verbunden.

Der axiale Abstand L1 der Endanschläge 29 zu den nach aussen umgeformten Rastelementen 25 ist gleich gross oder geringfügig, das heisst z.B. 0 bis 1mm grösser als der axiale Abstand L2 der zugehörigen Anschlagflächen 13a, 13b des Buchsengehäuses 5. Dadurch wird sichergestellt, dass beim Einschieben der Kontaktklemme 21 in eine Ausnehmung 11 des Buchsengehäuses 5 beim Erreichen der jeweiligen Endlage die Rastelemente 25 mit der Anschlagfläche 13b verriegeln können. Die Kontaktklemme 21 ist dann im Buchsengehäuse 5 gegenüber grösseren Bewegungen in und entgegen der Klemmrichtung P gesichert.

Zum Verbinden mehrerer Leiterpaare werden die Enden der abisolierten Drähte mit je einer Kontaktklemme 21 elektrisch leitend verbunden. Die einen Kontaktklemmen 21 jedes Drahtpaares werden von der Rückseite her in die zugehörigen Ausnehmungen 11 des Buchsengehäuses 5 eingeschoben, bis die Rastelemente 25 beim Erreichen der Endlage mit den jeweiligen Anschlagflächen 13b verrasten. Die zweiten Kontaktklemmen 21 jedes Drahtpaares werden von der Rückseite her in die zugehörigen Sacklöcher 7 des Stiftgehäuses 3 eingeschoben und auf die sekundären Kontaktstifte 17b aufgesteckt, bis die Rastelemente 23 mit den Anschlagflächen 19a der jeweiligen Nuten 19 verriegeln. Das Ende des Installationsrohrs wird in die Rohraufnahme 9 des Stiftgehäuses 3 eingepresst und kraft- oder formschlüssig mit diesem verbunden. Das Stiftgehäuse 3 und das Buchsengehäuse 5 werden in der durch die Codierung vorgegebenen Ausrichtung zusammengeschoben. Dabei werden die primären Kontaktstifte 17a in die Kontaktklemmen 21 des Buchsengehäuses 5 hineingeschoben, bis die Rastelemente 23 mit den Anschlagflächen 19a der jeweiligen Nuten 19 verriegeln.

Falls die Kontaktklemmen 21 im Buchsengehäuse 5 mit Leitern verbunden sind, die aus einem Übergangsdübel herausragen, wird nun der Verbindungsabschnitt 3c des Stiftgehäuses 3 zusammen mit dem Buchsengehäuse 5 in den Übergangsdübel eingepresst und je nach Ausführungsform des Übergangsdübels kraft-und/oder formschlüssig mit diesem verbunden.

Anstelle eines an einem Gebäudebauteil angeordneten Übergangsdübels kann ein entsprechendes Übergangselement mit einer Aufnahme für das Buchsengehäuse 5 und den Verbindungsabschnitt 3c des Stiftgehäuses 3 am Ende eines frei zugänglichen Installationsrohrs angeordnet sein.

Bei weiteren alternativen Ausführungsformen kann das Buchsengehäuse 5 selbst als solches Übergangselement ausgebildet sein und beispielsweise analog zum Stiftgehäuse 3 eine Rohraufnahme zum Aufnehmen und Befestigen eines Installationsrohrs umfassen (nicht dargestellt).

Bei weiteren alternativen Ausführungsformen kann die Verbindung von elektrischen Leitern mit den primären Kontaktstiften 17a auch in anderer Weise erfolgen. Insbesondere können z.B. sekundäre Kontaktstifte 17b nicht kollinear und/oder einstückig mit den jeweiligen primären Kontaktstiften 17a am Stiftgehäuse 3 angeordnet sein. So können z.B. Stiftgehäuse 3 als Eckstücke ausgebildet sein, wobei die Rohraufnahme 9 z.B. abgewinkelt, insbesondere unter 90° zum Verbindungsabschnitt 3c angeordnet ist.

## Patentansprüche

1. Klemmvorrichtung (1) zum ausreissfesten Verbinden von elektrischen Leitern bei Elektroinstallationen in Gebäuden, umfassend
a) ein Stiftgehäuse (3) mit einem Verbindungsabschnitt (3c), in dem primäre Kontaktstifte (17a) in einer Klemmrichtung (Z) hervorragen und
b) ein Buchsengehäuse (5) mit durchgehenden Ausnehmungen (11), in denen Kontaktklemmen (21) angeordnet sind, die durch Zusammenklemmen des Stiftgehäuses (3) und des Buchsengehäuses (5) in Klemmrichtung (Z) mit den jeweils korrespondierenden primären Kontaktstiften (17a) beim Stiftgehäuse (3) elektrisch verbindbar sind, wobei die Kontaktstifte (17a) ausreissfest am Stiftgehäuse (3) gehalten sind, **dadurch gekennzeichnet, dass** die Kontaktklemmen (21) nach innen ragende federnde Rastelemente (23) und die primären Kontaktstifte (17a) Anschlagflächen (19a) für diese Rastelemente (23) umfassen, die so angeordnet sind, dass sie beim Zusammenstecken des Stiftgehäuses (3) und des Buchsengehäuses (5) beim Erreichen einer Endlage miteinander verrasten und dadurch die Kontaktklemmen (21) formschlüssig und ausreissfest an den primären Kontaktstiften (17a) sichern, und dass die Kontaktklemmen (21) nach aussen ragende federnde Rastelemente (25) und das Buchsengehäuse (5) im Bereich der Ausnehmungen (11) Anschlagflächen (13b) für diese Rastelemente (25) umfassen, die so angeordnet sind, dass sie beim Einschieben der Kontaktklemmen (21) in die Ausnehmungen (11) beim Erreichen einer Endlage miteinander verrasten und dadurch die Kontaktklemmen (21) formschlüssig und ausreissfest am Buchsengehäuse (5) sichern.

2. Klemmvorrichtung (1) nach Anspruch 1, **dadurch gekennzeichnet, dass** die Kontaktklemmen (21) nach aussen hervorragende Endanschläge (29) und das Buchsengehäuse (5) mit diesen Endanschläge (29) korrespondierende Anschlagflächen (13a) umfassen, die so angeordnet sind, dass sie beim Einschieben der Kontaktklemmen (21) in die Ausnehmungen (11) nach dem Erreichen der jeweiligen Endlage den Bewegungsspielraum in Klemmrichtung (Z) begrenzen.

3. Klemmvorrichtung (1) nach einem der Ansprüche 1 bis 2, **dadurch gekennzeichnet, dass** das Buchsengehäuse (5) und das Stiftgehäuse (3) Verbindungsabschnitte (5c, 3c) mit zusammenpassenden asymmetrischen Formen als Codierung zum Definieren einer gegenseitigen Drehlage umfassen.

4. Klemmvorrichtung (1) nach einem der Ansprüche 1 bis 3, **dadurch gekennzeichnet, dass** am Stiftgehäuse (3) sekundäre Kontaktstifte (17b) angeordnet sind, und dass jeder primäre Kontaktstift (17a) elektrisch leitend mit einem dieser sekundären Kontaktstifte (17b) verbunden ist.

5. Klemmvorrichtung (1) nach Anspruch 4, **dadurch gekennzeichnet, dass** die sekundären Kontaktstifte (17b) einstückig mit den zugehörigen primären Kontaktstiften (17a) verbunden sind, und dass ein mittlerer Bereich jedes Kontaktstiftpaares (17a, 17b) in eine Gehäusebasis (3d) des Stiftgehäuses (3) eingebettet ist.

6. Klemmvorrichtung (1) nach Anspruch 5, **dadurch gekennzeichnet, dass** das Stiftgehäuse (3) zu einer Anschlussseite (3a) hin offene Sacklöcher (7) umfasst, und dass jeder sekundäre Kontaktstift (17b) von der Gehäusebasis (3d) her in ein solches Sackloch (7) hineinragt.

7. Klemmvorrichtung (1) nach einem der Ansprüche 1 bis 6, **dadurch gekennzeichnet, dass** das Stiftgehäuse (3) eine Rohraufnahme (9) zum Einstecken des Endes eines Installationsrohres umfasst.

8. Klemmvorrichtung (1) nach Anspruch 7, **dadurch gekennzeichnet, dass** die Rohraufnahme (9) einen näherungsweise ringförmigen Querschnitt hat, und dass sich die freie Querschnittfläche von der Anschlussseite (3a) her mit zunehmender Tiefe verringert, und/oder dass das Stiftgehäuse (3) im Bereich der Rohraufnahme (9) Strukturen zum kraft- und/oder formschlüssigen Verbinden eines Installationsrohrs umfasst.

9. Verfahren zum ausreissfesten Verbinden von elektrischen Leitern bei Elektroinstallationen in Gebäuden mit einer Klemmvorrichtung (1) nach einem der Ansprüche 1 bis 8, **dadurch gekennzeichnet, dass** die Enden der Leiter mit Kontaktklemmen (21) verbunden werden, dass jede der Kontaktklemmen (21) entsprechend den herzustellenden Verbindungen mittels der nach aussen ragenden federnden Rastelemente (25) ausreissfest in einer Ausnehmung (11) mit einer Anschlagfläche (13b) am Buchsengehäuse (5) oder mittels der nach innen ragenden federnden Rastelemente (23) ausreissfest mit einem Kontaktstift (17a, 17b) mit einer Anschlagfläche (19a) verbunden wird, der ausreissfest am Stiftgehäuse (3) gehalten ist, und dass die mit dem Buchsengehäuse (5) verbundenen Kontaktklemmen (21) ausreissfest mit den Kontaktstiften (17a) im Stiftgehäuse (3) verbunden werden.

## Claims

1. A clamping device (1) for connecting electrical conductors in electrical installations in buildings such that they cannot be pulled out, comprising
a) a pin housing (3) having a connecting portion (3c), in which primary contact pins (17a) protrude in a clamping direction (Z) and
b) a socket housing (5) having continuous cut-outs (11) in which contact clips (21) are arranged, which can be electrically connected to the respective corresponding primary contact pins (17a) in the pin housing (3) by clamping together the pin housing (3) and the socket housing (5) in the clamping direction (Z), the contact pins (17a) being retained on the pin housing (3) such that they cannot be pulled out, **characterized in that** the contact clips (21) comprise inwardly protruding sprung latch elements (23) and the primary contact pins (17a) comprise stop surfaces (19a) for these latch elements (23), which are arranged such that they latch to one another when intermating the pin housing (3) and the socket housing (5) when an end position is reached and thus secure the contact clips (21) to the primary contact pins (17a) in an interlocking manner and such that they cannot be pulled out, and **in that** the contact clips (21) comprise outwardly protruding sprung latch elements (25) and the socket housing (5) comprises stop surfaces (13b) for these latch elements (25) in the region of the cut-outs (11), which are arranged such that they latch to one another when inserting the contact clips (21) into the cut-outs (11) when an end position is reached and thus secure the contact clips (21) to the socket housing (5) in an interlocking manner and such that they cannot be pulled out.

2. The clamping device (1) according to Claim 1, **characterized in that** the contact clips (21) comprise outwardly protruding end stops (29) and the socket housing (5) comprises stop surfaces (13a) corresponding to these end stops (29), which are arranged such that they limit the movement clearance in the clamping direction (Z) when inserting the contact clips (21) into the cut-outs (11) once the relevant end position is reached.

3. The clamping device (1) according to any one of Claims 1 to 2, **characterized in that** the socket housing (5) and the pin housing (3) comprise connecting portions (5c, 3c) having matching asymmetrical shapes as a coding for defining a mutual rotational position.

4. The clamping device (1) according to any one of Claims 1 to 3, **characterized in that** secondary contact pins (17b) are arranged on the pin housing (3), and **in that** each primary contact pin (17a) is electrically conductively connected to one of these secondary contact pins (17b).

5. The clamping device (1) according to Claim 4, **characterized in that** the secondary contact pins (17b) are integrally connected to the associated primary contact pins (17a), and **in that** a central region of each contact pin pair (17a, 17b) is embedded into a housing base (3d) of the pin housing (3).

6. The clamping device (1) according to Claim 5, **characterized in that** the pin housing (3) comprises blind holes (7) that are open toward a connection side (3a), and **in that** each secondary contact pin (17b) protrudes into such a blind hole (7) from the housing base (3d).

7. The clamping device (1) according to any one of Claims 1 to 6, **characterized in that** the pin housing (3) comprises a conduit receptacle (9) for inserting the end of an installation conduit.

8. The clamping device (1) according to Claim 7, **characterized in that** the conduit receptacle (9) has an approximately annular cross section, and **in that** the free cross-sectional area decreases from the connection side (3a) as the depth increases, and/or **in that** the pin housing (3) comprises structures for connecting an installation conduit in a frictional and/or interlocking manner in the region of the conduit receptacle (9).

9. A method for connecting electrical conductors in electrical installations in buildings such that they cannot be pulled out by means of a clamping device (1) according to any one of Claims 1 to 8, **characterized in that** the ends of the conductors are connected to contact clips (21), **in that** each of the contact clips (21), depending on the connections to be established, is connected to a stop surface (13b) on the socket housing (5) in a cut-out (11) by means of the outwardly protruding sprung latch elements (25) such that it cannot be pulled out or is connected to a contact pin (17a, 17b) having a stop surface (19a), which contact pin is retained on the pin housing (3) such that it cannot be pulled out, by means of the inwardly protruding sprung latch elements (23) such that it cannot be pulled out, and **in that** the contact clips (21) connected to the socket housing (5) are connected to the contact pins (17a) in the pin housing (3) such that they cannot be pulled out.

## Revendications

1. Dispositif de serrage (1) destiné au raccordement résistant à l'arrachement de câbles électriques pour des installations électriques dans des bâtiments, comprenant
a) un boîtier à broches (3) avec une partie de raccordement (3c) dans laquelle des broches de contact primaires (17a) dépassent dans une direction de serrage (Z) et
b) un boîtier à douilles (5) avec des évidements (11) traversants dans lesquels sont disposées des bornes de contact (21) qui peuvent être raccordées électriquement aux broches de contact primaires (17a) respectivement correspondantes du boîtier à broches (3) par serrage du boîtier à broches (3) et du boîtier à douilles (5) ensemble dans la direction de serrage (Z), les broches de contact (17a) étant maintenues de manière résistante à l'arrachement sur le boîtier à broches (3),
**caractérisé en ce que** les bornes de contact (21) comprennent des éléments d'encliquetage (23) résilients faisant saillie vers l'intérieur et les broches de contact primaires (17a) des surfaces d'arrêt (19a) pour ces éléments d'encliquetage (23), qui sont disposés de telle sorte que, lors de l'assemblage du boîtier à broches (3) et du boîtier à douilles (5), ils s'enclenchent les uns dans les autres lorsqu'une position de fin de course est atteinte et fixent ainsi les bornes de contact (21) aux broches de contact primaires (17a) par complémentarité de forme et de manière résistante à l'arrachement, et **en ce que** les bornes de contact (21) comprennent des éléments d'encliquetage (25) résilients faisant saillie vers l'extérieur et le boîtier à douilles (5) comprend, dans la zone des évidements (11), des surfaces d'arrêt (13b) pour ces éléments d'encliquetage (25), qui sont disposés de telle sorte que, lors de l'insertion des bornes de contact (21) dans les évidements (11), ils s'enclenchent les uns dans les autres lorsqu'une position de fin de course est atteinte et fixent ainsi les bornes de contact (21) au boîtier à douilles (5) par complémentarité de forme et de manière résistante à l'arrachement.

2. Dispositif de serrage (1) selon la revendication 1, **caractérisé en ce que** les bornes de contact (21) comprennent des butées de fin de course (29) faisant saillie vers l'extérieur et le boîtier à douilles (5) comprend des surfaces d'arrêt (13a) correspondant à ces butées de fin de course (29), qui sont disposées de telle sorte que, lors de l'insertion des bornes de contact (21) dans les évidements (11), elles limitent la liberté de déplacement dans la direction de serrage (Z) après que la position de fin de course respective est atteinte.

3. Dispositif de serrage (1) selon l'une quelconque des revendications 1 à 2, **caractérisé en ce que** le boîtier à douilles (5) et le boîtier à broches (3) comprennent des parties de raccordement (5c, 3c) avec des formes asymétriques s'adaptant l'une à l'autre en guise de codage pour définir une position de rotation mutuelle.

4. Dispositif de serrage (1) selon l'une quelconque des revendications 1 à 3, **caractérisé en ce que** des broches de contact secondaires (17b) sont disposées sur le boîtier à broches (3) et **en ce que** chaque broche de contact primaire (17a) est raccordée de manière électriquement conductrice à l'une de ces broches de contact secondaires (17b).

5. Dispositif de serrage (1) selon la revendication 4, **caractérisé en ce que** les broches de contact secondaires (17b) sont raccordées intégralement aux broches de contact primaires (17a) associées et **en ce qu'**une zone centrale de chaque paire de broches de contact (17a, 17b) est encastrée dans une base de boîtier (3d) du boîtier à broches (3).

6. Dispositif de serrage (1) selon la revendication 5, **caractérisé en ce que** le boîtier à broches (3) comprend des trous borgnes (7) ouverts vers un côté de raccordement (3a) et **en ce que** chaque broche de contact secondaire (17b) dépasse depuis la base de boîtier (3d) dans un tel trou borgne (7).

7. Dispositif de serrage (1) selon l'une quelconque des revendications 1 à 6, **caractérisé en ce que** le boîtier à broches (3) comprend un logement de conduit (9) destiné à l'enfichage de l'extrémité d'un conduit d'installation.

8. Dispositif de serrage (1) selon la revendication 7, **caractérisé en ce que** le logement de conduit (9) présente une section transversale approximativement annulaire et **en ce que** la surface de section transversale libre diminue à partir du côté de raccordement (3a) au fur et à mesure que la profondeur augmente et/ou **en ce que** le boîtier à broches (3) comprend, dans la zone du logement de conduit (9), des structures pour le raccordement par friction et/ou par complémentarité de forme d'un conduit d'installation.

9. Procédé de raccordement résistant à l'arrachement de câbles électriques pour des installations électriques dans des bâtiments au moyen d'un dispositif de serrage (1) selon l'une quelconque des revendications 1 à 8, **caractérisé en ce que** les extrémités des câbles sont raccordées à des bornes de contact (21), **en ce que** chacune des bornes de contact (21) est raccordée, conformément aux raccordements à établir, de manière résistante à l'arrachement, au moyen des éléments d'encliquetage (25) résilients faisant saillie vers l'extérieur, au boîtier à douilles (5) dans un évidement (11) avec une surface d'arrêt (13b), ou au moyen des éléments d'encliquetage (23) résilients faisant saillie vers l'intérieur, de manière résistante à l'arrachement, à une broche de contact (17a, 17b) avec une surface d'arrêt (19a), qui est maintenue de manière résistante à l'arrachement sur le boîtier à broches (3), et **en ce que** les bornes de contact (21) raccordées au boîtier à douilles (5) sont raccordées de manière résistante à l'arrachement aux broches de contact (17a) dans le boîtier à broches (3) .
